# EUROPEAN PATENT APPLICATION

(11) **EP 3 208 158 A1**
(43) Date of publication of application: **23.08.2017**
(21) Application number: 15851430.7
(22) Date of filing: 02.10.2015
(51) Int. Cl.: B60R 22/48

(54) **VEHICLE SWITCH STATE DETECTION DEVICE**

(30) Priority: 15.10.2014 JP 2014210643
(71) Applicant: Kabushiki Kaisha Tokai-Rika-Denki-Seisakusho, Niwa-gun, Aichi 480-0195 (JP)
(72) Inventor: KOIKE, Tatsuya, Niwa-gun Aichi 480-0195 (JP)
(74) Representative: TBK
(86) International application number: PCT/JP2015/078105
(87) International publication number: WO 2016/059984

(57) **Abstract**

A buckle switch (16) and a microcontroller (18) are provided. A power supply V is connected to the buckle switch (16), which switches the connection with the power supply V between a connected state and a disconnected state. The microcontroller (18) is connected with the buckle switch (16) and includes a removal switch input port (22) and a removal control port (20). The removal switch input port (22) detects the state of the buckle switch (16). The removal control port (20) is connected to the buckle switch (16) via a pull-down resistance (R1) and controls whether the pull-down resistance (R1) operates. The microcontroller (18) controls the removal control port such that the pull-down resistance (R1) does not operate when the buckle switch (16) is in the connected state and such that the pull-down resistance (R1) does operate when the buckle switch (16) is in the disconnected state.

## Description

### TECHNICAL FIELD

The present invention relates to a switch state detection device for a vehicle that detects states of switches such as a switch that detects fastening of a seatbelt and a switch that detects sitting of a vehicle occupant, or the like.

### BACKGROUND ART

A technology in which a buckle switch that detects insertion of a tongue is provided at a buckle of a seatbelt device and detects fastening of the seatbelt is known as an example of a switch state detection device for a vehicle.

For example, Japanese Patent Application Laid-Open (JP-A) No. 2009-240528 proposes a technology that detects fastening of a seatbelt when a movable contact is operated by insertion of a tongue.

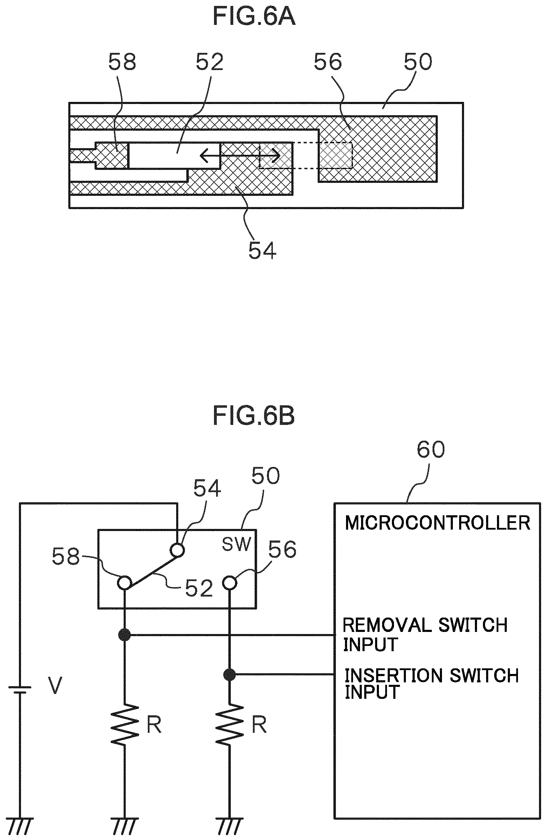

A seatbelt device that detects fastening of a seatbelt in this manner is provided with, for example, a movable contact 52 at a buckle switch 50 as shown in Fig. 6A. This seatbelt device detects two states, "fastened" and "unfastened". When the tongue is inserted into the seatbelt buckle, the movable contact 52 makes contact between a power supply contact 54 and an insertion switch input contact 56 that detects fastening of the seatbelt, and current flows to the insertion switch input contact 56. When the tongue is removed from the seatbelt buckle, the movable contact 52 moves and makes contact between the power supply contact 54 and a removal switch input contact 58 that detects unfastening of the seatbelt, and current flows to the removal switch input contact 58.

A detection circuit that is employed is, for example, the circuit illustrated in Fig. 6B. A power supply V is connected to the power supply contact 54. The insertion switch input contact 56 and removal switch input contact 58 are each connected to a microcontroller 60. The insertion switch input contact 56 and the removal switch input contact 58 are earthed via respective pull-down resistances R. Accordingly, the microcontroller 60 may detect whether or not the seatbelt is fastened.

### SUMMARY OF INVENTION

### TECHNICAL PROBLEM

However, the movable contact 52 causes a state of continuous connection, of the power supply V with the insertion switch input contact 56 or of the power supply V with the removal switch input contact 58. Therefore, current is continuously flowing and power is being continuously consumed. This power consumption is particularly problematic if the power supply is a battery and wireless communications or the like are used to transmit detection results of switch states such as seatbelt fastening results and the like.

Usually, an input port of a microcontroller has high impedance and most of the current flows through the pull-down resistance. The larger the resistance constant of the pull-down resistance, the smaller the current that flows and the lower the power consumption may be. However, the resistance constant may not be increased, because of increasing susceptibility to noise.

The present invention has been made in consideration of the situation described above, and an object of the invention is to reduce power consumption caused by a pull-down resistance.

### SOLUTION TO PROBLEM

A first aspect of the present invention for achieving the object described above includes: a switch unit to which a power supply is connected, the switch unit switching the connection with the power supply between a connected state and a disconnected state; and a control unit that is connected with the switch unit, the control unit including a detection port that detects a state of the switch unit and a control port that is connected with the switch unit via a pull-down resistance and that controls whether or not the pull-down resistance operates, and the control unit controlling the control port such that the pull-down resistance does not operate when the switch unit is in the connected state and such that the pull-down resistance operates when the switch unit is in the disconnected state.

According to the first aspect of the present invention, the switch unit is connected to the power supply and switches the connection with the power supply between the connected state and the disconnected state.

The control unit includes the detection port and the control port. The detection port detects states of the switch unit, which is to say the connected state and the disconnected state. The control port is connected to the switch unit via the pull-down resistance and controls whether or not the pull-down resistance operates.

The control unit controls the control port such that the pull-down resistance does not operate when the switch unit is in the connected state and the pull-down resistance does operate when the switch unit is in the disconnected state. That is, whether or not the pull-down resistance operates can be controlled by control of the control port. Thus, power may be reduced compared to a structure in which a pull-down resistance operates continuously. Therefore, power consumption caused by the pull-down resistance may be reduced.

In a second aspect of the present invention, the switch unit may include: a first contact that is connected to the power supply; a second contact that is connected to the detection port and that is connected to the control port via the pull-down resistance; and a movable contact that switches between the connected state and the disconnected state by connecting and disconnecting the first contact with the second contact.

In a third aspect of the present invention, the control unit may detect the connected state and the disconnected state by detecting whether or not electricity is being conducted from the power supply to at least one of the detection port and the control port.

In a fourth aspect of the present invention, when the switch unit switches from the connected state to the disconnected state, the control unit may control the control port such that the pull-down resistance operates after a predetermined duration has passed. Thus, noise in the predetermined duration may be isolated and the control unit may detect the conduction of electricity. The predetermined duration that is employed may be, as in an eighth aspect of the present invention, a duration with which the control unit can isolate detection of electricity conduction from noise.

In a fifth aspect of the present invention, the switch unit may include a first switch portion that is put into the connected state when a tongue of a seatbelt is inserted into a buckle, and a second switch portion that is put into the connected state when the tongue is removed from the seatbelt; and the control unit may be provided with respective the detection ports and the control ports corresponding with the first switch portion and the second switch portion. Thus, power consumption caused by the pull-down resistance may be reduced and whether or not the seatbelt is fastened may be detected.

Alternatively, in a sixth aspect of the present invention, the switch unit may include a third switch portion that is put into the connected state when a vehicle seat is being sat on, and a fourth switch portion that is put into the connected state when the vehicle seat is not being sat on; and the control unit may be provided with respective the detection ports and the control ports corresponding with the third switch portion and the fourth switch portion. Thus, power consumption caused by the pull-down resistance may be reduced and whether or not the vehicle seat is being sat on may be detected.

In a seventh aspect of the present invention, the switch unit may be switched to the connected state by at least one of a seatbelt being fastened and a vehicle occupant sitting on a vehicle seat.

### ADVANTAGEOUS EFFECTS OF INVENTION

According to the present invention as described above, an effect is provided in that power consumption caused by a pull-down resistance may be reduced.

### BRIEF DESCRIPTION OF DRAWINGS

Fig. 1 is a diagram showing schematic structures of a seatbelt device according to an exemplary embodiment of the present invention.
Fig. 2A is a diagram for describing control by a microcontroller in accordance with a state of a buckle switch.
Fig. 2B is a diagram for describing control by the microcontroller in accordance with another state of the buckle switch.
Fig. 2C is a diagram for describing control by the microcontroller in accordance with the another state of the buckle switch.
Fig. 3 is a flowchart showing an example of a flow of processing that is executed by the microcontroller of the seatbelt device according to the present exemplary embodiment.
Fig. 4 is a block diagram showing an example of structures that detect both fastening of a seatbelt and sitting.
Fig. 5A is a block diagram showing an example in which a sitting sensor is structured by two switches.
Fig. 5B is another block diagram showing the example in which the sitting sensor is structured by the two switches.
Fig. 5C is still another block diagram showing the example in which the sitting sensor is structured by the two switches.
Fig. 6A is a diagram showing a structural example of contacts of a seatbelt device that detects fastening of a seatbelt.
Fig. 6B is a block diagram showing an example of a detection circuit that detects fastening of the seatbelt.

### DESCRIPTION OF EMBODIMENTS

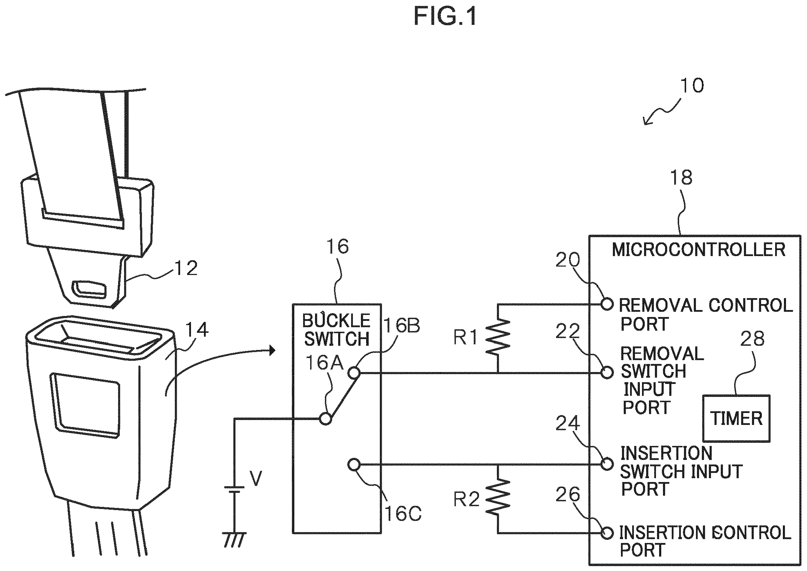

Herebelow, an example of an exemplary embodiment of the present invention is described in detail with reference to the attached drawings. The present exemplary embodiment is an example in which the switch state detection device for a vehicle is applied to a seatbelt device. Fig. 1 is a diagram showing schematic structures of the seatbelt device according to the exemplary embodiment of the present invention.

In the seatbelt device according to the present exemplary embodiment, a buckle switch 16 is provided at a buckle 14 into which a tongue 12 of a seatbelt is inserted. A microcontroller 18 detects states of the buckle switch 16.

The microcontroller 18 is provided with an insertion switch input port 24 that conducts electricity from a power supply V via the buckle switch 16 when the tongue 12 is inserted into the buckle 14. The microcontroller 18 is also provided with a removal switch input port 22 that conducts electricity from the power supply V via the buckle switch 16 when the tongue 12 is removed from the buckle 14.

The microcontroller 18 is further provided with a removal control port 20 to which a pull-down resistance R1 is connected and an insertion control port 26 to which a pull-down resistance R2 is connected. In the present exemplary embodiment, the microcontroller 18 controls the respective control ports so as to control whether or not the pull-down resistances R1 and R2 operate.

The removal control port 20 controls whether or not the pull-down resistance R1 operates and the insertion control port 26 controls whether or not the pull-down resistance R2 operates.

The buckle switch 16 includes three contacts 16A, 16B and 16C. The contact 16A is connected to the power supply V, one side of which is earthed. The contact 16B is connected to the removal switch input port 22 of the microcontroller 18, and is also connected to the removal control port 20 via the pull-down resistance R1. The contact 16C is connected to the insertion switch input port 24 of the microcontroller 18, and is also connected to the insertion control port 26 via the pull-down resistance R2. By a movable contact that is moved by the tongue 12 being inserted into or removed from the buckle 14, the contact 16A is connected with the contact 16B or the contact 16A is connected with the contact 16C.

The microcontroller 18 is further provided with a timer 28, which counts out a predetermined duration. The predetermined duration counted out by the timer 28 is specified to be a duration long enough that noise may be isolated when electricity conduction to the removal switch input port 22 or the insertion switch input port 24 is being detected.

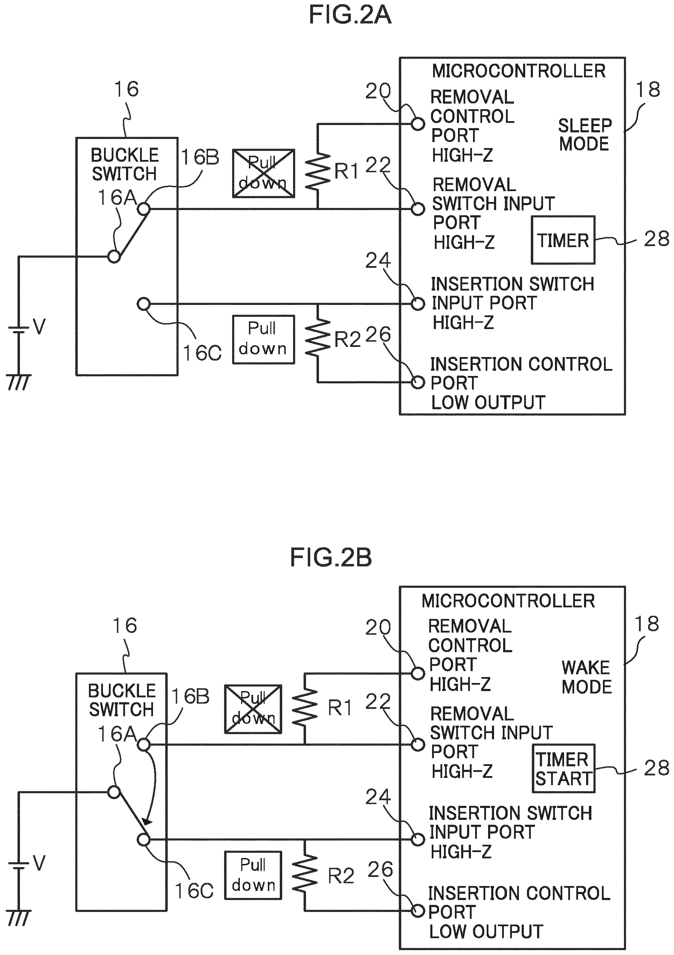

Now, control by the microcontroller 18 in accordance with states of the buckle switch 16 is described. Fig. 2A to Fig. 2C are diagrams for describing the control by the microcontroller 18 in accordance with states of the buckle switch 16.

In an initial state in which the tongue 12 has been removed from the buckle 14, as shown in Fig. 2A, the buckle switch 16 is in a state of conducting electricity from the power supply V to the removal switch input port 22. The microcontroller 18 controls the removal control port 20, the removal switch input port 22 and the insertion switch input port 24 into a high impedance (high-Z) state and controls the insertion control port 26 into a low (L) output state. At this time, the microcontroller 18 has been put into a sleep mode in order to reduce power consumption.

In the state shown in Fig. 2A, because the removal control port 20 and the removal switch input port 22 are both in the high impedance state, hardly any current flows through these removal side ports. Meanwhile, because the insertion control port 26 is in the low output state, the insertion side ports are in equivalent states, with the pull-down resistance R2 operating and the insertion switch input port 24 being pulled down.

Hence, when the tongue 12 is inserted into the buckle 14, the state of the buckle switch 16 changes and, as shown in Fig. 2B, electricity is conducted from the power supply V to the insertion switch input port 24. As a result, the microcontroller 18 detects a voltage change at the insertion switch input port 24, switches into a wake mode, and starts counting by the timer 28. Electricity is conducted to the insertion control port 26 of the microcontroller 18 via the pull-down resistance R2 and electricity is also conducted to the insertion switch input port 24. This may be detected at one or both of the ports. Thus, the microcontroller 18 may detect the insertion of the tongue 12 into the buckle 14.

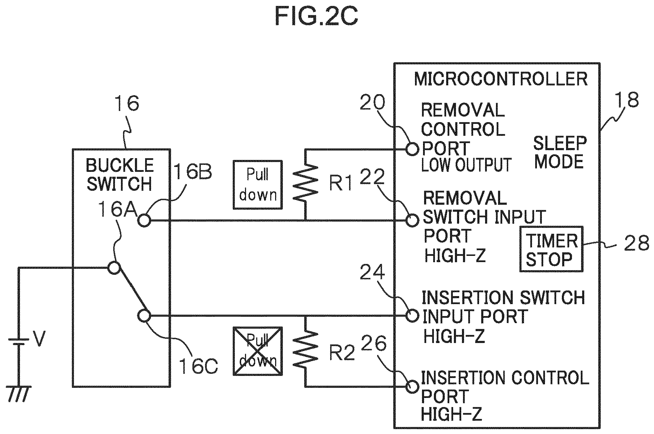

After the timer 28 has counted out the predetermined duration, as shown in Fig. 2C, the microcontroller 18 controls the removal control port 20 from the high impedance (high-Z) state to the low output state, and controls the insertion control port 26 from the low output state to the high impedance (high-Z) state.

In the state shown in Fig. 2C, because the insertion control port 26 and the insertion switch input port 24 are both in the high impedance state, hardly any current flows through the insertion side ports. Meanwhile, because the removal control port 20 is in the low output state, the removal side ports are in equivalent states, with the pull-down resistance R1 operating and the removal switch input port 22 being pulled down.

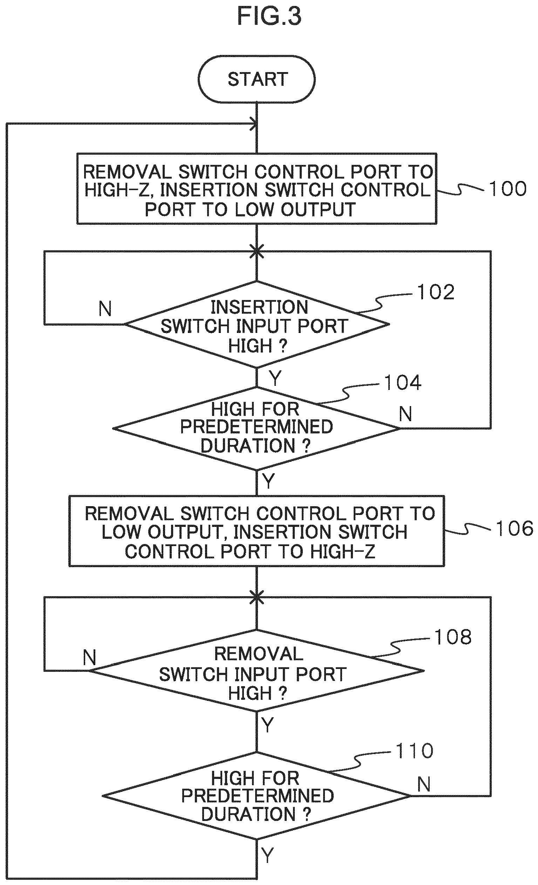

Now, specific processing that is carried out by the microcontroller 18 of the seatbelt device 10 according to the present exemplary embodiment structured as described above is described. Fig. 3 is a flowchart showing an example of a flow of processing that is executed by the microcontroller 18 of the seatbelt device 10 according to the present exemplary embodiment.

First, in step 100, the microcontroller 18 performs control to put the removal control port 20 into the high impedance state and to put the insertion control port 26 into the low output state, and then the microcontroller 18 proceeds to step 102. That is, the state shown in Fig. 2A is produced. As described above, because the removal control port 20 and the removal switch input port 22 are both in the high impedance state, hardly any current flows through the removal side ports. Meanwhile, because the insertion control port 26 is in the low output state, the insertion side ports are in equivalent states with the pull-down resistance R2 operating and pulling down the insertion switch input port 24. Thus, the pull-down resistance may be caused to operate and inputs to the microcontroller 18 may be kept stable even though power consumption is reduced.

In step 102, the microcontroller 18 makes a determination as to whether the insertion switch input port 24 is in a high state. This determination is based on a voltage change of the insertion switch input port 24 according to whether the buckle switch 16 is conducting electricity from the power supply V to the insertion switch input port 24 due to insertion of the tongue 12 into the buckle 14. The microcontroller 18 waits until the result of this determination is affirmative and then proceeds to step 104.

In step 104, the microcontroller 18 makes a determination as to whether the insertion switch input port 24 has stayed in the high state for the predetermined duration. This determination is made by the high state of the insertion switch input port 24 being counted out to the predetermined duration by the timer 28. If the result of this determination is negative, the microcontroller 18 returns to step 102 and repeats the processing described above. If the result is affirmative, the microcontroller 18 proceeds to step 106.

In step 106, the microcontroller 18 controls the removal control port 20 to the low output state and controls the insertion control port 26 to the high impedance state, and then proceeds to step 108. That is, the state shown in Fig. 2C is produced and, as described above, because the insertion control port 26 and the insertion switch input port 24 are both in the high impedance state, hardly any current flows through the insertion side ports. Meanwhile, because the removal control port 20 is in the low output state, the removal side ports are in equivalent states with the pull-down resistance R1 operating and pulling down the removal switch input port 22. Thus, the pull-down resistance may be caused to operate and inputs to the microcontroller 18 may be kept stable even though power consumption is reduced.

In step 108, the microcontroller 18 makes a determination as to whether the removal switch input port 22 is in the high state. This determination is based on a voltage change of the insertion switch input port 24 according to whether the buckle switch 16 is conducting electricity from the power supply V to the removal switch input port 22 due to removal of the tongue 12 from the buckle 14. The microcontroller 18 waits until the result of this determination is affirmative and then proceeds to step 116.

In step 110, the microcontroller 18 makes a determination as to whether the removal switch input port 22 has stayed in the high state for the predetermined duration. This determination is made by the high state of the removal switch input port 22 being counted out to the predetermined duration by the timer 28. If the result of this determination is negative, the microcontroller 18 returns to step 108 and repeats the processing described above. If the result is affirmative, the microcontroller 18 returns to step 100 and repeats the processing described above.

As described above, in the seatbelt device 10 according to the present exemplary embodiment, simply by the microcontroller 18 controlling the ports, the pull-down resistances may be caused to operate even though power consumption by the pull-down resistances is reduced. As a result, the lifetime of a battery when wireless communications are used to transmit detection results of switch states may be extended.

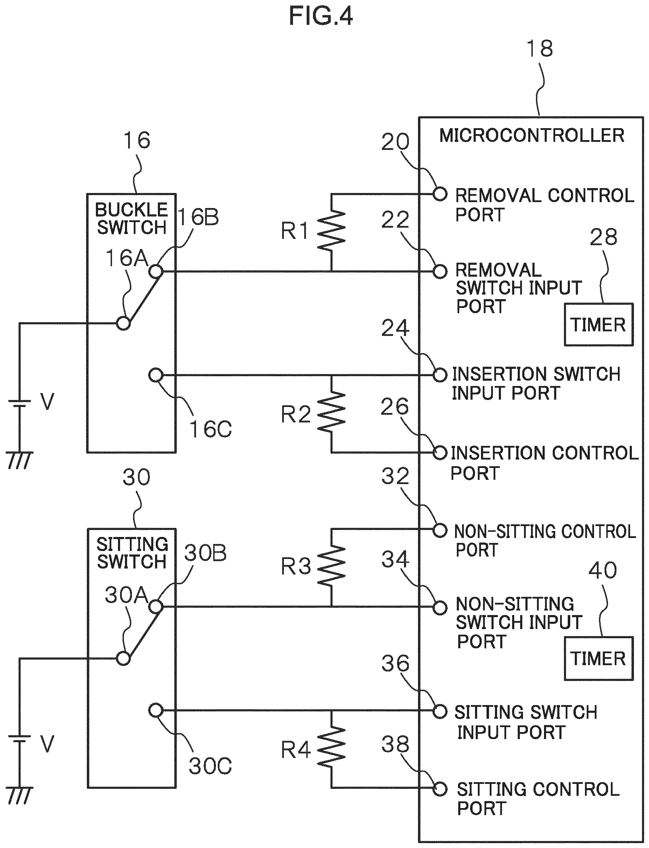

In the exemplary embodiment described above, an example is described in which the switch state detection device for a vehicle is applied to a seatbelt device, but this is not limiting. For example, instead of the buckle switch 16 provided at the buckle 14, the switch state detection device may be applied to detection of sitting using a sitting switch that is switched when a vehicle seat is sat on. Alternatively, as illustrated in Fig. 4, the device may be provided at both the buckle switch 16 and a sitting switch 30, and the microcontroller 18 may detect both fastening of the seatbelt and sitting. In the example in Fig. 4, similarly to the buckle switch 16, the sitting switch 30 is provided with three contacts 30A, 30B and 30C. Also similarly to the above exemplary embodiment, the microcontroller 18 is provided with the removal control port 20, the removal switch input port 22, the insertion switch input port 24 and the insertion control port 26 corresponding with the buckle switch 16, and is further provided with ports corresponding with the sitting switch 30 (a non-sitting control port 32, a non-sitting switch input port 34, a sitting switch input port 36 and a sitting control port 38) similarly to the buckle switch 16. Also similarly to the above exemplary embodiment, pull-down resistances R3 and R4 are provided at the sitting switch 30. The timer 28 for detecting fastening of the seatbelt and a timer 40 for detecting sitting are provided. Thus, both seatbelt fastening detection and sitting detection may be implemented by the microcontroller 18 controlling the ports, and power consumption may be reduced in the same manner as in the above exemplary embodiment.

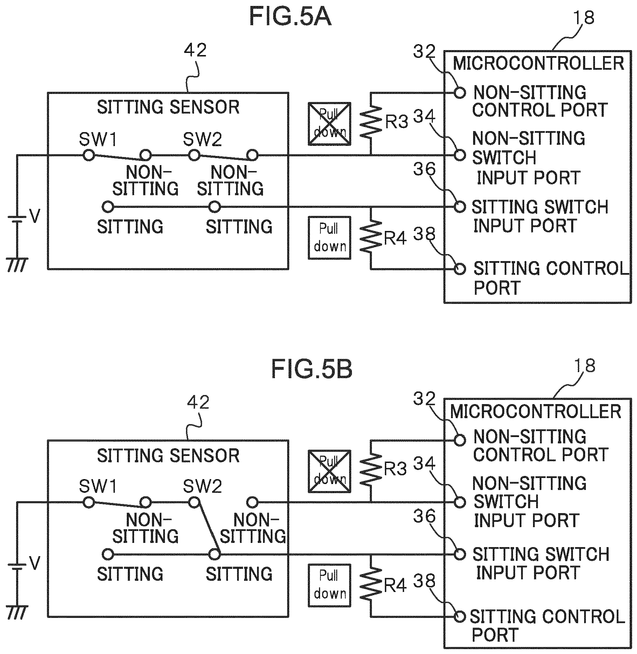

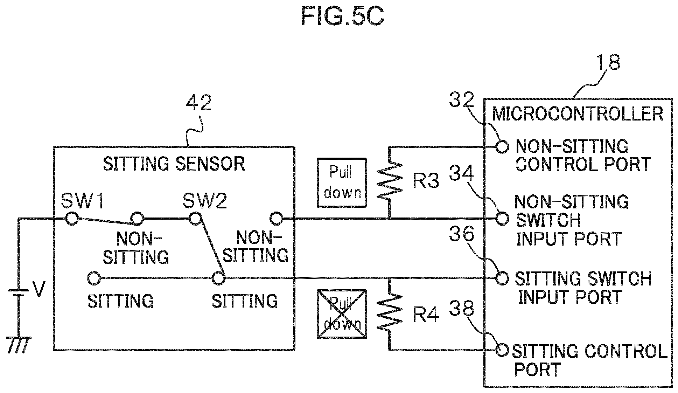

In Fig. 4, an example is illustrated in which sitting of a vehicle occupant is detected by a single sitting switch 30A. However, a sitting sensor 42 may be employed that detects sitting of a vehicle occupant with two switches (SW1 and SW2). In this structure, as shown in Fig. 5, the two switches SW1 and SW2 are each provided with a movable contact, a non-sitting contact and a sitting contact. The movable contact of switch SW1 is connected to a power supply V, the non-sitting contact of switch SW1 is connected to the movable contact of switch SW2, and the sitting contact of switch SW1 is connected to the sitting contact of switch SW2. The sitting contact of switch SW2 is connected to the non-sitting switch input port 34 of the microcontroller and is also connected to the non-sitting control port 32 via the resistance R3. The sitting contact of switch SW2 is connected to the sitting switch input port 36 and is also connected to the sitting control port via the resistance R4. Thus, when no vehicle occupant is sitting, as shown in Fig. 5A, the two switches (SW1 and SW2) are both connected to the non-sitting side and electricity is conducted from the power supply V to the non-sitting switch input port 34. In this situation, similarly to the exemplary embodiment described above, it is sufficient if the microcontroller 18 controls the non-sitting control port 32, the non-sitting switch input port 34 and the sitting switch input port 36 into the high impedance (high-Z) state and controls the sitting control port 38 into the low (L) output state. On the other hand, when a vehicle occupant is sitting and either of the switches (SW1 or SW2) is connected to the sitting side, then, as illustrated in Fig. 5B, electricity is conducted from the power supply V to the sitting switch input port 36. Therefore, it is sufficient if the microcontroller 18 detects a voltage change at the sitting switch input port 36, counts out a predetermined duration and, after the predetermined duration has been counted out, controls the ports into the state illustrated in Fig. 5C. That is, it is sufficient if the microcontroller 18 controls the non-sitting control port 32 from the high impedance (high-Z) state to the low output state and controls the sitting control port 38 from the low output state to the high impedance (high-Z) state.

In the exemplary embodiment described above, an example is described in which a movable contact-type switch is used as the buckle switch 16 or a sitting switch. However, switches are not limited thus. Non-contact switches such as magnetic switches, electrostatic switches and the like may be used.

The present invention is not limited by the above recitations. In addition to the above recitations, it will be clear that numerous modifications may be embodied within a technical scope not departing from the gist of the invention.

The disclosures of Japanese Patent Application No. 2014-210643 filed October 15, 2014 are incorporated into the present specification by reference in their entirety.

## Claims

1. A switch state detection device for a vehicle, comprising:
a switch unit to which a power supply is connected, the switch unit switching the connection with the power supply between a connected state and a disconnected state; and
a control unit that is connected with the switch unit, the control unit including
a detection port that detects a state of the switch unit and
a control port that is connected with the switch unit via a pull-down resistance and
that controls whether or not the pull-down resistance operates,
and the control unit controlling the control port such that the pull-down resistance does not operate when the switch unit is in the connected state and such that the pull-down resistance operates when the switch unit is in the disconnected state.

2. The switch state detection device for a vehicle according to claim 1, wherein the switch unit includes:
a first contact that is connected to the power supply;
a second contact that is connected to the detection port and that is connected to the control port via the pull-down resistance; and
a movable contact that switches between the connected state and the disconnected state by connecting and disconnecting the first contact with the second contact.

3. The switch state detection device for a vehicle according to claim 1 or claim 2, wherein the control unit detects the connected state and the disconnected state by detecting whether or not electricity is being conducted from the power supply to at least one of the detection port and the control port.

4. The switch state detection device for a vehicle according to any one of claims 1 to 3, wherein, when the switch unit switches from the connected state to the disconnected state, the control unit controls the control port such that the pull-down resistance operates after a predetermined duration has passed.

5. The switch state detection device for a vehicle according to any one of claims 1 to 4, wherein:
the switch unit includes a first switch portion that is put into the connected state when a tongue of a seatbelt is inserted into a buckle, and a second switch portion that is put into the connected state when the tongue is removed from the seatbelt; and
the control unit is provided with respective of the detection ports and the control ports corresponding with the first switch portion and the second switch portion.

6. The switch state detection device for a vehicle according to any one of claims 1 to 5, wherein:
the switch unit includes
a third switch portion that is put into the connected state when a vehicle seat is being sat on, and
a fourth switch portion that is put into the connected state when the vehicle seat is not being sat on; and
the control unit is provided with respective the detection ports and the control ports corresponding with the third switch portion and the fourth switch portion.

7. The switch state detection device for a vehicle according to any one of claims 1 to 4, wherein the switch unit is switched to the connected state by at least one of a seatbelt being fastened and a vehicle occupant sitting on a vehicle seat.

8. The switch state detection device for a vehicle according to claim 4, wherein the predetermined duration is a duration with which the control unit can isolate detection of electricity conduction from noise.
